# EUROPEAN PATENT APPLICATION

(11) **EP 1 713 029 A1**
(43) Date of publication of application: **18.10.2006**
(21) Application number: 06252052.3
(22) Date of filing: 13.04.2006
(51) Int. Cl.: G06Q 30/00

(54) **Presenting an interview question and answer session over a communications network**

(30) Priority: 15.04.2005 AU 2005901912
(71) Applicant: Jumbuck Entertainment, Melbourne, VIC 3000 (AU)
(72) Inventor: Risch, Adrian Paull, Melbourne, VIC 3000 (AU); Richards, Timothy Gerard, Melbourne, VIC 3000 (AU)
(74) Representative: Ahmad, Sheikh Shakeel

(57) **Abstract**

The present invention relates to presentation of an interview question and answer session over a communications network, particularly over a wireless network such as a 3G mobile telephone network.

In one form, the invention allows multiple mobile telephone users to remotely supply questions to a specific interview topic, and to view or listen to the answers to supplied questions as part of an interview question and answer session at a prescribed session time. The questions are submitted to and stored by a computer application for central access and review by an interviewee. Answers to selected questions are input at a single time or over several points in time, and question and answer sets are stored, edited and queued by a system operator. At the prescribed session time, the computer application then serves to mobile telephone users, in sequence, the question and answer sets with a suitable time delay between each question and its respective answer in order to simulate a real time interview session.

The invention has particular application in 'celebrity chatrooms', involving question and answer interview sessions with persons in the public eye (politicians, celebrities, etc).

## Description

### Field of the invention

The present invention relates to presentation of an interview question and answer session over a communications network, particularly over a wireless network such as a 3G mobile telephone network.

### Background of the invention

For persons in positions of authority, such as those holding office in government or corporate organisations, an important aspect of public life is question sessions in public forums. For example, elected representatives are required to answer questions in parliament, whilst company directors face questions in shareholders meetings. Question sessions assist in holding such persons accountable. On a more general level, for those in the public eye, there is great interest by the public in question and answer sessions, as evidenced by the popularity of TV celebrity and radio chat shows and in the question and answer format of the 'talkback radio' forum.

In the field of information technology, various well-known Internet portals such as Yahoo.com, AOL.com provide dedicated chat rooms for discussion or conferencing between interested parties, often with functionality beyond simple conversation (communication via typing on a keyboard or via voice chat), such as provision of additional multimedia tools, indicating to parties when other parties come online, etc.

More recently, advanced computer networks, and particularly advanced wireless networks such as the 3G mobile (or cellular) telephone networks and Wireless Internet (or'Wifi') networks, have been developing rapidly. Whilst it is clearly desirable to allow the conduct of real time question and answer sessions over wireless networks, technical and logistical difficulties have hitherto limited the implementation of such processes.

### Summary of the invention

According to one aspect of the present invention, there is provided a computer-implemented method of presenting an interview question and answer session over a communications network, comprising the steps of:
retrieving, from a database of pre-stored sets of questions and respective answers, a plurality of question and answer sets; and
forwarding said question and answer sets to one or more selected communications network users.

The question and answer sets may be forwarded either directly or indirectly to said one or more selected communications network users.

The present invention, by utilising a database of pre-stored questions and answer sets, obviates the technical and logistical difficulties inherent in conducting an interview over a communications network in real time. At the same time, the method of the present invention presents a legitimate set of interviewee responses to questions posed, and provides the appearance of a real time interview to the network users receiving or viewing the interview session.

In a preferred form, the communications network may be a wireless network and the users are mobile network users each equipped with a mobile device, but said question and answer set(s) can be forwarded by way of any other suitable network.

Preferably, the method comprises the further steps, carried out before the forwarding step of:
receiving, from multiple communication network users, respective questions over a communications network;
storing said questions;
providing said questions to an interviewee;
receiving answers to selected questions from the interviewee; and
storing the sets of questions and respective answers in the database.

The questions are provided to said interviewee for response at a first time (or at several points in time during a first period), and the stored question and answer sets are forwarded to the one or more selected communications network users at a subsequent second time being (or commencing at) a prescribed session time.

Answers to selected questions are input at a single time or over several points in time, and question and answer sets are stored, edited and queued by a system operator. At the prescribed session time, the computer application then serves to mobile telephone users, in sequence, the question and answer sets with a suitable time delay between each question and its respective answer in order to simulate a real time interview session.

Preferably, the method comprises the further step of queuing the stored question and answer sets by specifying the order in which the questions and answer sets are forwarded to said communication network users.

In a preferred form, the step of storing said questions comprises storing an associated user identification for each question. Preferably, the method comprises the step, after the answer receiving step, of selectively editing the answers.

In a preferred form, the method comprises the step of advising said communications network users of a predetermined session time, wherein the forwarding step is commenced at said predetermined session time.

Preferably, the forwarding step comprises delaying, for a prescribed time after which a particular question is forwarded, the forwarding of the respective answer. The step of delaying forwarding a respective answer may be performed by an instruction contained in or forwarded with the question, said instruction causing a device used by the communications network user to access the communications network and request, after said prescribed time, forwarding of the respective answer. Alternatively, the step of delaying forwarding a respective answer may be performed by waiting for the prescribed time after the forwarding of a question before forwarding the respective answer.

Preferably, the question and answer sets wherein the question and answer sets may be forwarded to the communications network users in text form, such as in SMS or MMS format.

The method may comprise the step of, before the forwarding step, using a client formatter device to convert the question and answer sets into an appropriate format, and the forwarding of the question and answer sets is conducted by way of a server selected from the group of a markup language server, an SMS/MMS server, and a wireless server.

In a further aspect of the present invention, there is provided a computer-implemented system for presenting an interview question and answer session over a communications network, comprising:
a question receiver unit configured to receive questions from a plurality of system users;
a question storage unit configured to store said questions;
an interviewee interface unit configured to allow an interviewee to access said questions and input respective answers to one or more of said questions;
an answer receipt and storage unit configured to receive and store answers submitted by the interviewee in response to said questions, and to associate each stored answer with a respective stored question, to provide a queue of stored question and answer sets;
a broadcast unit configured to forward, to multiple system users, at a predetermined question and answer session time, successive questions and their respective answers.

In a further aspect of the present invention, there is provided a computer software product for presenting an interview question and answer session over a communications network, the software product comprising:
computer program code which, when executed, causes retrieval from a database of pre-stored sets of questions and respective answers at least one question and answer set; and
computer program code which, when executed, causes said set to be forwarded to one or more selected communications network users.

The computer software product may comprise computer program code which, when executed, specifies the order in which the questions and answers are forwarded to the communications network users.

The product may comprise computer program code which, when executed, delays the sending of an answer to a respective question for a predetermined time from the forwarding of the question. This computer program code may comprise an instruction that is contained in or forwarded with a question to a user device, and which when executed causes said device to access the communications network after the predetermined time and request the respective answer to be forwarded.

Preferably, the computer software product comprises:
computer program code which, when executed, causes storage of questions received from multiple communications network users;
computer program code which, when executed, causes provision of said questions to an interviewee;
computer program code which, when executed, causes storage of questions and respective answers in said database.

The computer software product may comprise computer program code which, when executed, causes the storage of an associated user identification for each question.

In this specification, where a document, act or item of knowledge is referred to or discussed, this reference or discussion is not an admission that the document, act or item of knowledge or any combination thereof was at the priority date part of common general knowledge, or known to be relevant to an attempt to solve any problem with which this specification is concerned.

### Description of the drawings

An embodiment of the present invention will now be described with reference to the accompanying drawings, in which:
Figure 1 is a schematic diagram of the communications environment, software and hardware components of the invention;
Figure 2 is a flow chart of the steps for allowing a wireless network user to submit questions to an interviewee;
Figure 3 is a flow chart of the steps for processing the received questions; and
Figure 4 is a flow chart illustrating the steps of conducting an interview over the wireless network.

### Detailed description of the drawings

The embodiment of the present invention described below allows mobile telephone users to remotely supply questions to a specific interview topic, and to view or listen to the answers to supplied questions as part of an interview question and answer session at a prescribed session time. The user is able to input text or voicemail questions using their mobile telephone and send those questions (eg. by way of SMS/TXT messaging, voicemail or using client-side software such as a browser) to a computer application, which stores questions received from multiple viewers. The questions can be accessed centrally and reviewed by an interviewee, and answers to selected questions can be input centrally by the interviewee at a single time or over several points in time. Question and answer sets can thus be stored by the computer application. At the prescribed session time, the computer application then serves to mobile telephone users, in sequence, the question and answer sets, in text or voice format, allowing a suitable time delay between each question and its respective answer in order to simulate a real time interview session.

An interview can be presented over a wireless network, generally represented by reference 10. Users 12 access the wireless network by way of devices such as mobile telephone handsets, portable data assistants such as Blackberry device, or any other suitable portable devices.

Also connected to wireless network 10 is an interview hosting system 14. Hosting system 14 comprises a server computer 13 that runs a computer software product 15, made up of a number of components or modules. A question receipt component 16 controls the receiving and processing of questions sent to hosting system 14 by the mobile devices 12 of wireless network users.

An access and review component 18 allows a system operator at computer terminal 17 to extract and review the questions and submit them to the individual who is to be interviewed (the 'Interviewee') at computer terminal 19.

An answer receipt and storage component 20 controls the receipt of answers back from interviewee 19 and storage of those answers in a question/answer database 21.

A settings component 22 allows for certain settings of the interview process to be adjusted by the system operator at terminal 17.

Finally, a broadcast system 24 controls the sending of questions and answers to the wireless network user devices 12, in accordance with the settings of interview hosting system 14.

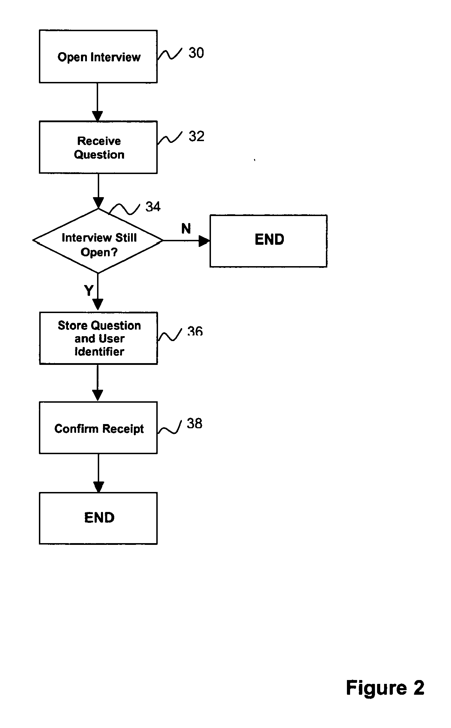

The method steps carried out in conducting the interview will be described below with reference to Figure 2.

At step 30 the interview is opened, allowing users to submit questions via mobile devices 12 to interviewee at terminal 19, who may for example be a political, corporate or cultural figure. The interview and the time within which questions may be submitted, and instructions for submitting those questions, are also advertised in print and/or electronic media, for example, as well as by communications over the wireless network to the users of mobile devices 12.

Questions are then submitted by mobile users as SMS/TXT messages, emails or via a client-side web application. The questions may also be submitted in voice form by a user leaving a voicemail message at interview hosting system 14. The users of mobile devices 12 may be billed for taking part in the interview in an appropriate manner, such as via the mobile service billing plan.

Following receipt of a question (step 32), question receipt component 16 determines at step 34 whether the interview is still open and the interviewee at terminal 19 is still receiving questions. When the interview is closed, the user is notified, generally through the same channel in which the question was sent (ie. SMS/email, voicemail etc) and the process is terminated.

At step 36 question receipt component 16 stores the question and an associated identifier for the user of device 12, such as a user-supplied nickname or a wireless network mobile subscriber integrated services digital network (MSISDN) number, in a questions database 37.

At step 38 the user is notified, generally through the same channel through which the question was sent, that the submission of the question was successful and that the question will be considered by the interviewee.

The question submission process continues for other mobile users until the time for receiving questions has elapsed and the interview is closed.

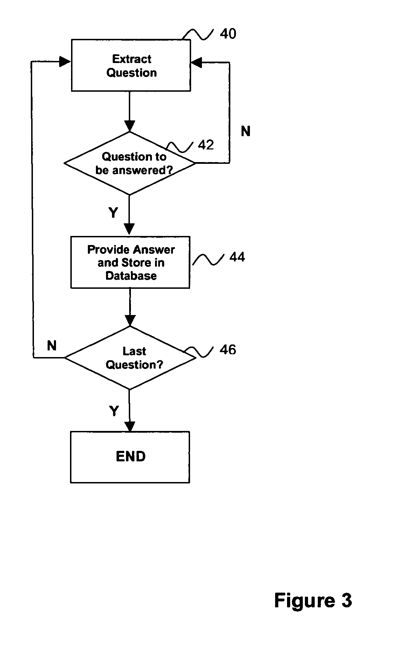

The method steps carried out in answering the questions and preparing for the broadcast of the interview are described with reference to Figure 3. At step 40 the interviewee at terminal 19 extracts a question from the questions database 37 and at step 42 decides whether the question is to be answered. Where the question will not be answered, the interviewee simply returns to step 40 to extract the next question.

Where the question is to be answered, the interviewee at terminal 19 provides their answer in text and/or voice form and submits it (step 44) to access and review component 18. Access and review component 44 then stores the answer, along with a reference to the original question, in a question/answer database 21.

Where the question is the last question to be answered, the process terminates at step 46. Otherwise, the interviewee extracts the next question from question database 37 and the process continues.

After the question answering process is complete, the system operator at terminal 17 adjusts certain settings related to the interview broadcast, using a settings component 22. Primarily, this involves establishing the order in which the questions and their respective answers are to be sent out. The question order may be arrived at in consultation with the interviewee, or actually set by the interviewee 19 directly.

The system operator at terminal 17 also specifies the time delay between the sending of a question and sending of an answer to that question. Again, the time delay is specified by way of settings component 22, with the actual implementation depending on the format in which the question and answer are sent, as described in further detail below. For example, in a WML page or http-equiv element in an xhtml/html page, the time delay may be controlled using a specific command in the source code of the page sent to the mobile device 12. When the page containing the question is displayed to the end user, it may include a timer element set to, say, 20 seconds, which instructs the client-side software to check for new content at a specific URL or network location. The new content may thus be a new page containing the answer to the question displayed. in an SMS/MMS system, the time delay will generally be controlled using the server-side software. After the question has been delivered to the SMS/MMS gateway for delivery over the air to the client mobile devices 12, the server-side software counts to, say, 60 seconds, before sending the answer text to the SMS/MMS gateway and thus to the interconnected mobile devices 12. Using the client-side software, the SMS/MMS can then be displayed on the user devices 12.

The system operator at terminal 17 also performs any necessary editing of the questions and/or answers by way of settings component 22. For example, the system operator may remove any duplicate questions and reword any poorly expressed questions and/or answers. The system operator may also carry out some question editing before the questions are submitted to the interviewee, again by way of the settings component 22.

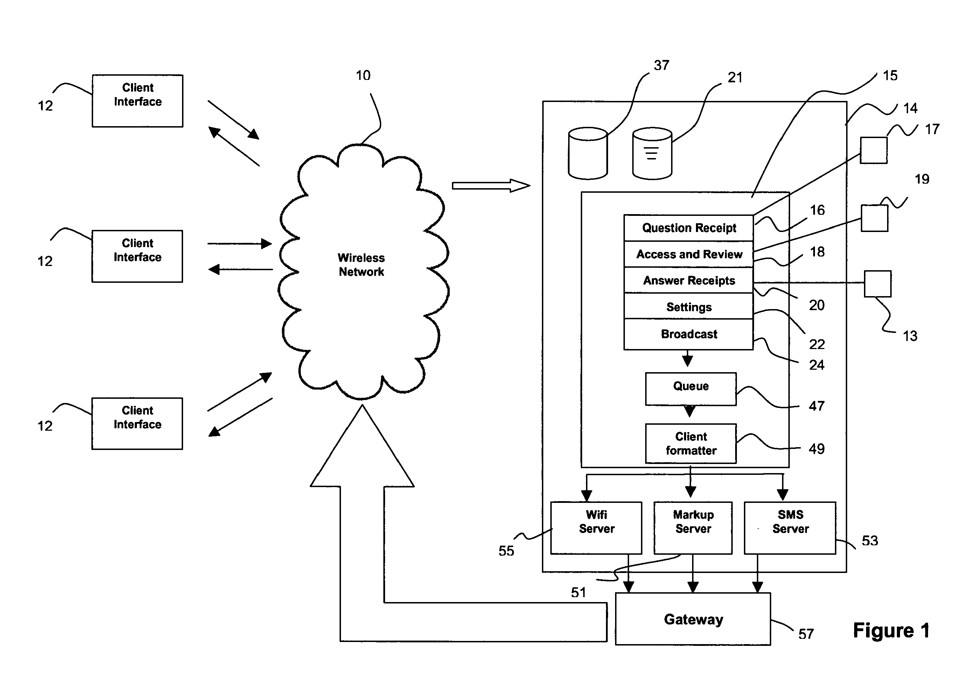

Once the question sequence and time delay are specified, the relevant questions and answers are extracted from the questions/answers database 21 and stored in proper order in a queue 47 (Figure 1), ready for broadcast.

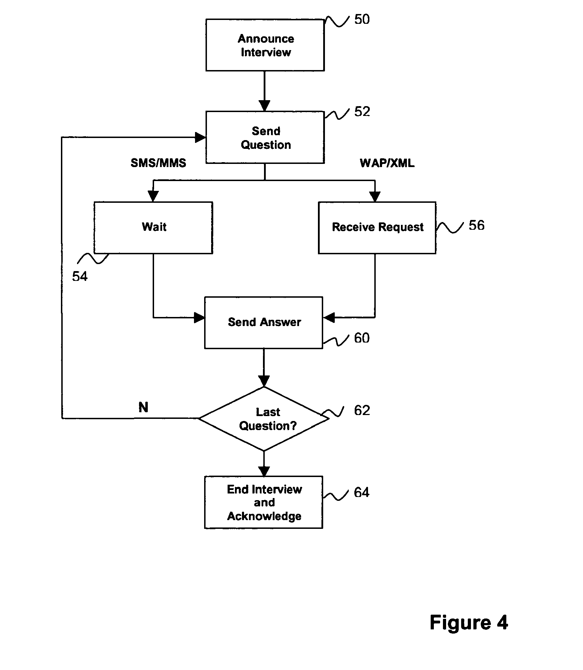

The process for conducting the interview is described by reference to Figure 4. At step 50 the interview is announced, such as by advertisement in the print or electronic media or through the wireless network, eg. by way of an SMS message or email to mobile users. The interview announcement also provides the time at which the interview will be broadcast to the users.

At step 52, at the scheduled time, the first question is extracted from queue 47 and sent by broadcast component 24 to the user devices 12 over wireless network 10 by first sending the question to a client formatter 49 to format the question to the different types of user devices used to access the wireless network.

In turn, and as appropriate, client formatter 49, in turn sends the question either to one or more of the following devices:
Markup Language Server 51 - for devices accessing the wireless network 10 using a browser-based interface that displays documents written in a markup language such as WML or XHTML;
SMS/MMS Server 53 - for devices accessing the wireless network 10 through a non-browser interface, using protocols such as SMS or MMS; or
Wireless Server 55 - for devices accessing the wireless network 10 through a WiFi interface using protocols such as TCP/IP.

Each server 51-55 accesses a gateway 57 that connects the system 15 to the wireless network 10.

The sending of an answer to the question is also controlled by broadcast component 24 in accordance with the type of device or communications protocol used to access the wireless network. In the case of an SMS/MMS message, the broadcast component simply waits for the specified time, (step 54) before extracting the answer from queue 47 and sending it over the wireless network 10 as an SMS/MMS message (step 60).

Where the answer is sent to a WAP-equipped device, the question itself contains a suitable embedded WML tag, such as <time/>. The <time/>tag is parsed by browser software running on the user device and after the specified time, causes the browser to issue a GET request (step 56) that is sent back over the wireless network 10, to the broadcast component 24. Upon receipt of the GET request, broadcast component 24 extracts the answer from queue 47 and sends it over wireless network 10 to the users of devices 12 (step 60).

A similar tag can be embedded in an XML document to replicate this functionality for Wifi devices.

At step 62 broadcast component 24 determines whether the most recently sent question is the last question of the interview by checking whether the queue 47 is empty. If queue 47 is empty, the interview is over and the users of devices 12 are sent a message to this effect (step 64). Where the queue 47 is not empty, the process returns to step 52 and the next question is extracted from the queue.

It will be realised that the invention provides an improved method for conducting an interview over a wireless network. By recording and auto playback of the question and answer sets, the method overcomes the logistical difficulties inherent in conducting real time interviews and also provides revenue opportunities to system operators. Interviewees are able to access and respond to questions centrally and at their own preferred time(s), and questions can be collated and queued by system operators, with the process retaining the legitimacy of the interview questions and answers, and allowing presentation in an apparent real time format.

Modifications and improvements to the invention will be readily apparent to those skilled in the art. Such modifications and improvements are intended to be within the scope of this invention. For example, the stored question and answer sets may be queued in a random order if desired, or may be queued in accordance with a particular characteristic of the content.

## Claims

1. A computer-implemented method of presenting an interview question and answer session over a communications network, comprising the steps of:
retrieving, from a database of pre-stored sets of questions and respective answers, a plurality of question and answer sets; and
forwarding said question and answer sets to one or more selected communications network users.

2. The method of claim 1, wherein the communications network is a wireless network and the users are mobile network users each equipped with a mobile device.

3. The method of claim 1 or claim 2, comprising the further steps, carried out before the retrieving and forwarding steps, of:
receiving, from multiple communication network users, respective questions over a communications network;
storing said questions;
providing said questions to an interviewee;
receiving answers to selected questions from the interviewee; and
storing the sets of questions and respective answers in the database.

4. The method of claim 3, comprising the step of queuing the stored question and answer sets by specifying the order in which the questions and answer sets are forwarded to said communication network users.

5. The method of claim 3 or claim 4, wherein the step of storing said questions comprises storing an associated user identification for each question.

6. The method of any one of claims 3-5, comprising the step, after the answer receiving step, of selectively editing the answers.

7. The method of any preceding claim, comprising the step of advising said communications network users of a predetermined session time, wherein the forwarding step is commenced at said predetermined session time.

8. The method of any preceding claim, wherein the forwarding step comprises delaying, for a prescribed time after which a particular question is forwarded, the forwarding of the respective answer.

9. The method of claim 8, wherein the step of delaying forwarding a respective answer is performed by an instruction contained in or forwarded with the question, said instruction causing a device used by the communications network user to access the communications network and request, after said prescribed time, forwarding of the respective answer.

10. The method of claim 8, wherein the step of delaying forwarding a respective answer is performed by waiting for the prescribed time after the forwarding of a question before forwarding the respective answer.

11. The method of any preceding claim, wherein the question and answer sets are forwarded to the communications network users in text form, such as SMS or MMS format.

12. The method of any preceding claim, comprising the step of, before the forwarding step, using a client formatter device to convert the question and answer sets into an appropriate format, and the forwarding of the question and answer sets is conducted by way of a server selected from the group of a markup language server, an SMS/MMS server, and a wireless server.

13. A computer-implemented system for presenting an interview question and answer session over a communications network, comprising:
a question receiver unit configured to receive questions from a plurality of system users;
a question storage unit configured to store said questions;
an interviewee interface unit configured to allow an interviewee to access said questions and input respective answers to one or more of said questions;
an answer receipt and storage unit configured to receive and store answers submitted by the interviewee in response to said questions, and to associate each stored answer with a respective stored question, to provide a queue of stored question and answer sets;
a broadcast unit configured to forward, to multiple system users, at a predetermined question and answer session time, successive questions and their respective answers.

14. A computer software product for presenting an interview question and answer session over a communications network, the software product comprising:
computer program code which, when executed, causes retrieval from a database of pre-stored sets of questions and respective answers at least one question and answer set; and
computer program code which, when executed, causes said set to be forwarded to one or more selected communications network users.

15. The computer software product of claim 14, comprising computer program code which, when executed, specifies the order in which the questions and answers are forwarded to the communications network users.

16. The computer software product of claim 14 or 15, comprising computer program code which, when executed, delays the sending of an answer to a respective question for a predetermined time from the forwarding of the question.

17. The computer software product of claim 16, wherein the computer program code comprises an instruction that is contained in or forwarded with a question to a user device, and which when executed causes said device to access the communications network after the predetermined time and request the respective answer to be forwarded.

18. The computer software product of any one of claims 14 to 17, comprising:
computer program code which, when executed, causes storage of questions received from multiple communications network users;
computer program code which, when executed, causes provision of said questions to an interviewee;
computer program code which, when executed, causes storage of questions and respective answers in said database.

19. The computer software product of any one of claims 14 to 18 comprising computer program code which, when executed, causes the storage of an associated user identification for each question.
